(19) Europäisches Patentamt
European Patent Office
Office européen des brevets

(11) Veröffentlichungsnummer: **0 366 792 A1**

(12) # EUROPÄISCHE PATENTANMELDUNG veröffentlicht nach Art. 158 Abs. 3 EPÜ

(21) Anmeldenummer: **88905464.9**

(51) Int. Cl.5: **A01N 57/02 , A01H 1/02**

(22) Anmeldetag: **17.03.88**

(86) Internationale Anmeldenummer:
**PCT/SU88/00056**

(87) Internationale Veröffentlichungsnummer:
**WO 89/08400 (21.09.89 89/23)**

(43) Veröffentlichungstag der Anmeldung:
**09.05.90 Patentblatt 90/19**

(84) Benannte Vertragsstaaten:
**CH DE FR GB IT LI**

(71) Anmelder: **VSESOJUZNY NAUCHNO-ISSLEDOVATELSKY INSTITUT SELSKOKHOZAISTVENNOI BIOTEKHNOLOGII VSESOJUZNOI AKADEMII SELSKOKHOZYAISTVENNYKH NAUK IMENI V.I. LENINA**
**ul. Pskovskaya 12-4 Moscow, 127253(SU)**

Anmelder: **VSESOJUZNY NAUCHNO-ISSLEDOVATELSKY INSTITUT RASTENIEVODSTA IMENI N.I. VAVILOVA VSESOJUZNOI AKADEMII SELKOKHOZYAISTVENNYKH NAUK IMENI V.I. LENINA**
**ul. gertsena, 44 Leningrad, 190000(SU)**

Anmelder: **INSTITUT ELEMENTOORGANICHESKIKH SOEDINENY IMENI A.N. NESMEY ANOVA AKADEMII NAUK SSSR**
**ul. Vavilova, 28**
**Moscow, 117813(SU)**

(72) Erfinder: **FEDIN, Marat Alexandrovich**
**ul. Dm.Ulyanova, 24-158**
**Moscow, 107078(SU)**
Erfinder: **KUZNETSOVA, Tatyana Alexandrovna**
**Khoroshevskoe shosse, 36b-62**
**Moscow, 123007(SU)**
Erfinder: **KABACHNIK, Martin Izrailevich**
**ul. Gubkina, 4-11**
**Moscow, 117333(SU)**
Erfinder: **MASTRJUKOVA, Tatyana Alexeevna**
**ul. Dm.Ulyanova, 4-1-68**
**Moscow, 117333(SU)**
Erfinder: **GENKINA, Galina Karpovna**
**ul. Koneva, 3-8**
**Moscow, 123436(SU)**
Erfinder: **BARANOV, Jury Ivanovich**
**ul. Rossoshanskaya, 13-1-457**
**Moscow, 107042(SU)**
Erfinder: **KAABAK, Leonid Vladimirovich**
**ul. Moldagulovoi, 10-4-5**
**Moscow, 111395(SU)**
Erfinder: **GUSKOV, Konstantin Alexeevich**
**Fergansky proezd, 14-3-76**
**Moscow, 109507(SU)**
Erfinder: **SHIPOV, Anatoly Emmanuilovich**
**pr. Andropova, 37-5-70**
**Moscow, 115487(SU)**
Erfinder: **MARKOVA, Marina Vladimirovna**
**ul. V.Ulbrikhta, 23/7-179**
**Moscow, 125252(SU)**
Erfinder: **KALYANOVA, Raisa Mikhailovna**
**pr. Marshala Zhukova, 30-2-59**
**Moscow, 123154(SU)**
Erfinder: **URJUPIN, Andrei Borisovich**
**ul. Magnitogorskaya, 13-210**
**Moscow, 105318(SU)**
Erfinder: **SUPRUN, Anna Pavlovna**
**ul. Gorkogo, 6-1-76**
**Moscow, 103009(SU)**
Erfinder: **KHRANINA, Tatyana Iosofovna**
**ul. Ostrovityanova, 16-4-140**
**Moscow, 117321(SU)**
Erfinder: **ALSING, Tamara Karlovna**
**Zagrebsky bulvar, 7-1-455**
**Leningrad, 192284(SU)**
Erfinder: **VOSKOBOINIK, Leonid**



Xerox Copy Centre

Konstantinovich
ul. Pushkina, 35-6
Krasnodar, 350023(SU)
Erfinder: **FEDORENKO, Tatayana Sergeevna**
ul. Shkolnaya, 11-23
Krasnodar, 350059(SU)
Erfinder: **OVSISCHER, Mikhail Ruvimovich**
ul. Priorova, 14a-50
Moscow, 125299(SU)
Erfinder: **KALASHNIKOVA, Vladimira**
Nikolaevna
Kutuzovsky pr., 8-16
Moscow, 121248(SU)

(74) Vertreter: **von Füner, Alexander, Dr.**
Patentanwälte v. Füner, Ebbinghaus, Finck
Mariahilfplatz 2 & 3
D-8000 München 90(DE)

(54) **VERFAHREN ZUR STERILISATION VON PFLANZLICHEN POLLEN.**

(57) Das Verfahren zur Sterilisation der Staubbeutel von Pflanzen sieht die Behandlung der Pflanzen mit einem Sterilisationsmittel in Verbindung mit einem Verdünner in der V. und oder VI. Periode der Organogenese vor. Erfindungsgemäss verwendet man als Sterilisationsmittel Phosphorsäurederivate der allgemeinen Formel

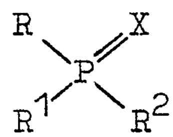

worin X für O,S steht,

R und R' für Alkyl-, Aryl-, Alkoxyl-, Aroxyl-, Hydroxylgruppen steht;

$R^2$ Alkyl-, Aryl-, Alkoxyl-, Aroxyl-, Merkaptoalkyl-, Hydroxylgruppen, durch Metall wasserstoffsubstituierte Hydroxylgruppen, Sulfhydrylgruppen, durch Metall wasserstoffsubstituierte Sulfhydrylgruppen, Karbamoylmethylmerkaptogruppen bedeutet, oder Gemische dieser Verbindungen.

EPAA-38416.7

# VERFAHREN ZUR STERILISATION DER STAUBBEUTEL VON PFLANZEN

Die vorliegende Erfindung bezieht sich auf die Biologie und Landwirtschaft, insbesondere auf ein Verfahren zur Sterilisation der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformen in einer höheren Leistung (um 25 bis 30%) und einer besseren Produktqualität. Es besteht ein Verfahren zur Erzeugung von neuen Hybriden, welches auf einem System "zytoplasmatische Pollensterilität - Restorer der Fertilität" beruht. Diesem Verfahren liegt eine fortwährende (innerhalb von I2 bis I4 Jahren) und komplizierte Selektionsarbeit zugrunde, die das Schaffen von sterilen Analoga, Fixatoren der Sterilität und Restorern der Fertilität umfasst. Besonders aussichtsreich sind Verfahren, die auf der Sterilisation der Staubbeutel von Pflanzen mit chemischen Sterilisationsmitteln (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogen, Analogon für die Fixierung der Sterilität bei mütterlichen Formen und für die Restauration der Fertilität bei väterlichen Formen zu erzeugen. Man kann praktisch bei der Verwendung der Gametozide die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen die volle Pollensterilität bei behandelten Pflanzen unter Erhaltung der Lebensfähigkeit von Eizellen bewirken und eine ausreichend hohe Fähigkeit (wünschenswert mindestens 70% der Kontrolle), den Fruchtknoten unter freier Bestäubung zu bilden, sicherstellen. Die Werte ihrer Phytotoxizität und Toxizität für Warmblüter müssen minimal sein.

Bekannt sind Verfahren zur Sterilisation der Staubbeutel von Getreidekulturen (L.Dzh. Nikell. Regulatory rosta rasteny. Primenenie v selskom khozyaistve. Moskva, izdatelstvo "Kolos", I984, S. 28-3I; SU, A, 906457. L.J. Nikell. Wachstumsregulatoren von Pflanzen. Anwendung in der Landwirtschaft. Moskau, Verlag "Kolos", I984, S. 28-3I), welche in der Behandlung von Pflanzen mit Sterilisationsmitteln wie 2-Chloräthylphosphonsäure (Ethrel), Maleinsäurehydrazid, Di-(polyfluoralkyl)-phosphorsäuren und ihre Salze u.a. bestehen. Die Behandlung der Pflanzen mit mehreren Sterilisationsmitteln erfolgt in der V. oder VI. Periode der Organogenese (nach F.M.Kupermann),

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gesonderte einkernige Pollenkörner gebildet (F.M.Kupermann. Morfofiziologiya rasteny. Moskva, izdatelstvo "Vysshaya shkola", I973, S.30-36. Morfophysiologie von Pflanzen, Moskau, Verlag "Vysshaya

shkola", I973, S.30-36).

Bekannt ist weiter ein Verfahren zur Sterilisation der Staubbeutel von Graspflanzen (GB, A, I567I53), das darin besteht, dass man die Behandlung von Graspflanzen mit einem Sterilisationsmittel in der Periode durchgeführt, die zwischen Auftreten des zweiten Stengelgliedes und Ährenschieben liegt. Als Sterilisationsmittel verwendet man heterozyklische Verbindungen, deren Hauptvertreter 2-Karboxy-3,4-methanpyrrolidin oder 2-Methoxykarbonyl-3,4-methanpyrrolidin sind. Die angegebenen Verbindungen werden in Verbindung mit Verdünnern und oberflächenaktiven Stoffen eingesetzt.

Offenbarung der Erfindung

Der Erfindung liegt die Aufgabe zugrunde, durch die Wahl von Sterilisationsmitteln ein Verfahren zu entwickeln, welches es möglich macht, dieses Verfahren zur Sterilisation der Staubbeutel eines breiten Spektums von Kulturen mit hohem Sterilisationsgrad unter Erhaltung der hohen Fähigkeit von Samen, Fruchtansätze bei freier Bestäubung zu bilden, zu verwenden.

Diese Aufgabe wird dadurch gelöst, dass im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäss als Sterilisationsmittel Phosphorsäurederivate der allgemeinen Formel

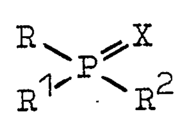

worin X für O, S steht,

R und R' für Alkyl-, Aryl-, Alkoxyl-, Aroxyl-, Hydroxylgruppen steht;

$R^2$ Alkyl-, Aryl-, Alkoxyl-, Aroxyl-, Merkaptoalkyl-, Hydroxylgruppen, durch Metall wasserstoffsubstituierte Hydroxylgruppen, Sulfhydrylgruppen, durch Metall wasserstoffsubstituierte Sulfhydrylgruppen, Karbamoylmethylmerkaptogruppen bedeutet, oder Gemische dieser Verbindungen dienen.

Das Sterilisationsmittel kann in Verbindung mit einem beliebigen bekannten und dazu geeigneten Verdünner verwendet werden. Es ist zweckmässigerweise in Verbindung mit Wasser in Form einer 0,I- bis 2%igen wässrigen Emulsion zu verwenden. Als Pflanzen, die mit dem angegebenen Sterilisationsmittel behandelt werden, dienen bevorzugt Graspflanzen, Sonnenblume.

Das erfindungsgemässe Verfahren ermöglicht, die männliche Sterilität von Pflanzen (98-I00%) zu erzielen und eine hohe Fähigkeit zur Samenbildung (über 70%) zu erhalten. Zwecks Erzielung des hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

## Beste Ausführungsvariante der Erfindung

Das erfindungsgemässe Verfahren wird wie folgt durchgeführt.

Pflanzen wie z.B. Winter- und Sommerweizen, diploider und tetraploider Roggen, Tritikale, Hirse, Sonnenblume, Gräser werden mit einem Sterilisationsmittel behandelt, wobei als solche Phosphorsäurederivate dienen.

Phosphorsäurederivate können in Verbindung mit beliebigen geeigneten Verdünnern verwendet werden. Als Verdünner ist Wasser zweckmässigerweise zu benutzen.

Dabei ist 0,I- bis 2%ige wässrige Emulsion der angegebenen Verbindungen vorteilhaft zu verwenden.

Man kann den gebrauchsfertigen Lösungen beliebige geeignete oberflächenaktive Stoffe wunschgemäss zusetzen. Beim Aufbringen auf die Pflanzen sind gewöhnlich den gebrauchsfertigen Lösungen beliebige bekännte Hilfszusätze wie Netzmittel, Dispergiermittel und Adhäsionsmittel zweckmässigerweise hinzuzusetzen.

Das Sterilisationsmittel lässt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Aufwandmenge des Sterilisationsmittels hängt von Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmässig, die wiederholte Behandlung von Pflanzen in der VI. Periode der Organogenese durchzuführen. Die Gesamtdosis des Sterilisationsmittels beträgt 0,6 bis 20 kg/ha.

Die Prüfergebnisse der erfindungsgemässen Verbindungen auf die akute Toxizität im Tierversuch haben gezeigt, dass die angegebenen Verbindungen hauptsächlich von schwacher oder mittlerer Toxizität, bezogen auf den Wirkstoff, sind. Bei der peroralen Verabreichung den Mäusen oder Ratten beträgt $LD_{50}$ bei Thiophosphorsäure-O,O,S-triestern 100-4000 mg/kg Lebendtiergewicht, $LD_{50}$ bei Dithiophosphorsäure-O,O,S-triestern oder O,O-diestern 250-8000 mg/kg Lebendtiergewicht, $LD_{50}$ bei Thiophosphinsäure-O-estern 300-2000 mg/kg Lebendtiergewicht, $LD_{50}$ bei Thiophosphonsäure-O-estern 500-2000 mg/kg Lebendtiergewicht und $LD_{50}$ bei tertiären phosphanoxiden und -sulfiden $>$ 2000 mg/kg Lebendtiergewicht.

Die gametozide Aktivität der erfindungsgemässen Sterilisationsmittel war in Feldversuchen in verschiedenen bodenklimatischen Zonen mit Teilstücken von 10 $m^2$ Grösse in drei- bis viermaligen Wiederholung festgestellt. Jedes Sterilisationsmittel wurde mindestens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung von Hauptähren und anderen Stockwerken in Pergamentbeuteln. Bei Weizen und Tritikale werden Einzelisolatoren benutzt. Bei Roggen schliesst man je I Ähre von 5 bis 7 verschiedenen nebeneinander befindlichen Pflanzen in einen gemeinsamen Isolator ein. Bei Hirse wird jede Rispe getrennt isoliert. Der Sterilitätsprozentsatz (X) für Weizen, Roggen, Tritikale und Hirse wird nach der Formel

$$X = \left[ I - \frac{\text{Anzahl der in einem Isolator befruchteten Samen von behandelten Pflanzen}}{\text{Anzahl der in einem Isolator befruchteten Samen von unbehandelten Kontrollpflanzen}} \right] x I00\%$$

ermittelt.

Die Kornzahl der in nicht isolierten Ähren Kontrollpflanzen wird bedingt für I00% Ansetzen bei freier Bestäubung angenommen.

Um zuverlässige Angaben zu erhalten, verwendet man 20 bis 25 Isolatoren jeder Wiederholung für Weizen und Tritikale, I0 bis I5 Isolatoren jeder Wiederholung für Roggen und Hirse.

Zur Kontrolle der chemischen Sterilisation des Sonnenblumenpollens werden für jede Verbindung 45 behandelte Pflanzen je Wiederholung benutzt, wobei I5 Pflanzen zwecks Selbstbestäubung des Blütenkörbchens isoliert werden, I5 Pflanzen mit einem Pollengemisch, gesammelt von 20 bis 25 behandelten isolierten Körbchen, bestäubt werden, und I5 Pflanzen für freie Bestäubung gelassen werden, damit das Ansetzen von Achänen mit dem Pollen der Vaterform kontrolliert werden kann.

Man beurteilt die Pollensterilität von Pflanzen der Sonnenblume nach der Pollenfertilität und -keimfähigkeit, nach den morphologischen Besonderheiten von Spermien und nach der Fähigkeit von Achänen zum Ansetzen durch Bestäubung der behandelten isolierten Pflanzen mit dem Pollen der unbehandelten väterlichen Form. Die Lebensfähigkeit der Eizelle wird nach der Samenbildung bei behandelten Pflanzen bei freier Bestäubung der väterlichen Form bestimmt.

Es ist wünschenswert, die Behandlung von Pflanzen bei heiterem windstillem Wetter durchzuführen.

Alle Verbindungen dringen in die Gewebe der Pflanzen innerhalb von 4 Stunden nach der Behandlung vollständig ein. Im Falle der atmosphärischen Niederschläge im Verlaufe der vierstündigen Periode ist es notwendig, die Pflanzen in der VI. Periode der Organogenese wiederholt zu behandeln.

Die Phosphorsäurederivate stellt man in an sich bekannter Weise her.

1) Man stellt Thiophosphorsäure-0,0-S-triester durch Alkylieren der Salze von Thiophosphorsäure-0,0-diestern mit Alkylhalogeniden her.

2) Man stellt Alkylphosphonsäuren durch

a) Hydrolyse der entsprechenden Dihalogenide,

b) Dismutation der entsprechenden Phosphonigsäuren her.

3) Man stellt Dithiophosphorsäure-0,0,S-triester durch Alkylieren der Salze von Dithiophosphorsäure-0,0-diestern mit entsprechenden Halogenderivaten her.

4) Man stellt Dithiophosphorsäure-0,0-diester durch Umsetzung von Phosphorpentasulfid mit entsprechenden Alkoholen her.

5) Man stellt die Salze der letzteren durch Neutralisation der Säuren mit entsprechenden Hydroxiden her.

6) Man stellt Salze der Thiophosphinsäuren durch Umsetzung der entsprechenden Halogenderivate mit wässrigen Alkalien her.

7) Man stellt Ester der letzteren beim Alkylieren der Salze mit entsprechenden Alkyl(aryl)halogeniden her.

8) Man stellt Salze der Thiophosphonsäure-O-ester bei der Umsetzung von Thiophosphonsäuredihalogeniden in inerten Lösungsmitteln in Gegenwart von Basen mit Alkoholen unter darauffolgender Behandlung mit wässrigen Hydroxiden her.

9) Ester dieser Säuren sind durch Alkylierung der Salze mit entsprechenden Alkylierungsmitteln erhalten.

IO) Man stellt tertiäre Phosphanoxide und Phosphansulfide durch Umsetzung von Phosphoroxychlorid und Phosphorthiochlorid mit entsprechenden Grignards Reagenzien her.

II) Man stellt Phosphorsäure-O,O-diester durch Umsetzung der entsprechenden Alkohole (Phenole) mit Phosphorpentoxid her.

Zu einem besseren Verständnis der vorliegenden Erfindung werden folgende konkrete Beispiele angeführt.

Beispiel I bis 4

Pflanzen des Winterweizens Sorte Mironovskaya 808 werden in der V. Periode der Organogenese durch Zerstäubung einer I,5%igen wässrigen Emulsion von Thiophosphorsäure-O,O-diäthylester-S-butylester, Thiophosphorsäure-O,O-dipropylester-S-butylester, Thiophosphorsäure-O,O-dibutylester-S-butylester, Thiophosphorsäure-O,O-diisobutylester-S-butylester mit Hilfe einer Rückenspritze behandelt. Die Emulsion enthält 0,0I Masse% Dimethylsulfoxid und 0,I Masse % Kalziumalkylbenzolsulfonat mit I2 bis I4 C-Atomen. Der Verbaruch an Präparat beträgt 9 kg/ha. Als Kontrolle dienen Pflanzen, behandelt mit einem Verdünner ohne Sterilisationsmittel.

Die Prüfergebnisse sind in der Tabelle I angeführt.

Die ähnlichen Ergebnisse sind bei der Behandlung des Winterweizens Sorte Mironovskaya 808 in der VI.

Periode der Organogenese erhalten.

Beispiele 5 bis 20

Man verfährt analog dem in Beispielen I-4 beschriebenen. Als Sterilisationsmittel verwendet man eine 2%ige wässrige Emulsion von Dithiophosphorsäure-O,O-diisopropylester (Kalium-Salz), Dithiophosphorsäure-O,O-diisopropylester-S-butylester, Dithiophosphorsäure-O,O,S-triethylester, N (Diäthoxythiophosphorylmerkapto)azetyl valin-methylamid, Natriumdiäthylthiophosphinat, Natriumdiphenylthiophosphinat, Natriumdibutylthiophosphinat, Dibutyl-thiophosphinsäure-S-propylester, Natrium-methan-thiophosphonsäure-O-ethylester, Natrium-methan-thiophosphonsäure-O-isopropylester, Natrium-methan-thiophosphonsäure-O-butylester, Natrium-methan-thiophosphonsäure-O-amylester, Triphenylphosphanoxid, Phosphorsäure-O,O-di-p-tolylester.

Die Emulsion enthält O,OI Masse % Dimethylsulfoxid und O,I Masse % Kalziumalkylbenzolsulfonat mit I2 bis I4 C-Atomen.

Die Prüfergebnisse sind in der Tabelle I dargestellt. Der Verbrauch an Präparat beträgt I2 kg/ha.

Tabelle I

| lfd. Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 37,7 | 0,0 | 40,4 | I00,0 |
| 2. | Beispiel I | 0,I | 99,7 | 3I,6 | 78,2 |
| 3. | Beispiel 2 | 0,0 | I00,0 | 3I,4 | 77,7 |
| 4. | Beispiel 3 | 0,0 | I00,0 | 37,I | 9I,8 |
| 5. | Beispiel 4 | 0,0 | I00,0 | 34,2 | 84,6 |
| 6. | Beispiel 5 | 0,5 | 98,7 | 40,I | 99,2 |

Fortsetzung der Tabelle I

| I | 2 | 3 | 4 | 5 | 6 |
|---|---|---|---|---|---|
| 7. | Beispiel 6 | 0,8 | 97,9 | 38,7 | 95,8 |
| 8. | Beispiel 7 | 2,3 | 94,0 | 35,8 | 88,6 |
| 9. | Beispiel 8 | I,6 | 95,8 | 40,2 | 99,5 |
| I0. | Beispiel 9 | 3,9 | 89,7 | 40,0 | 99,0 |
| II. | Beispiel I0 | 6,7 | 82,3 | 37,6 | 93,I |
| I2. | Beispiel II | 0,0 | I00,0 | 36,6 | 90,6 |
| I3. | Beispiel I2 | 2,7 | 92,8 | 37,I | 9I,8 |
| I4. | Beispiel I3 | 0,0 | I00,0 | 36,8 | 9I,I |
| I5. | Beispiel I4 | 0,4 | 99,0 | 37,0 | 9I,6 |
| I6. | Beispiel I5 | 7,2 | 80,9 | 40,2 | 93,5 |
| I7. | Beispiel I6 | 6,8 | 82,0 | 39,5 | 97,8 |
| I8. | Beispiel I7 | 0,2 | 99,5 | 38,I | 94,3 |
| I9. | Beispiel I8 | I,3 | 96,6 | 30,I | 74,5 |
| 20. | Beispiel I9 | 2,I | 94,4 | 36,6 | 90,6 |
| 2I. | Beispiel 20 | 0,6 | 98,4 | 37,9 | 93,8 |

Beispiele 2I bis 26

Pflanzen des Winterweizens Sorte Priboi werden in der V. Periode der Organogenese durch Zerstäubung einer I%igen wässrigen Emulsion von Thiophosphorsäure-0,0-diethylester-S-butylester, Thiophosphorsäure-0,0-dipropylester-S-butylester, Thiophosphorsäure-0,0-dibutylester-S-butylester, Thiophosphorsäure-0,0-diisobutylester-S-butylester, Dithiophosphorsäure-0,0-diisopropylester-S-butylester, Dithiophosphorsäure-0,0-diisopropylester (Kalium-Salz) mit Hilfe einer Rückenspitze behandelt. Die Emulsion enthält 0,0I Masse % N,N-Dimethylformamid und 0,I Masse % Kalziumalkylbenzolsulfonat mit I2 bis I4 C-Atomen. Der Verbrauch an Präparat beträgt 6 kg/ha.

Die Prüfergebnisse sind in der Tabelle 2 angeführt.

Die ähnlichen Ergebnisse sind bei der Behandlung des Winterweizens Sorte Priboi in der VI. Periode der

Organogenese erhalten.

Tabelle 2

| lfd Nr. | Beispiel Nr. | Anzahl der Kőrner im Isolator | Prozentsatz der Sterilität | Anzahl der Kőrner bei freier Bestäubung | Prozentsatz des Ansetzens bei freier Bestäubung |
|---|---|---|---|---|---|
| I | 2 | 3 | 4 | 5 | 6 |
| I. | Kontrolle | 32,I | 0,0 | 36,8 | I00,0 |
| 2. | Beispiel 2I | 0,3 | 99,I | 30,4 | 82,6 |
| 3. | Beispiel 22 | 0,0 | I00,0 | 30,0 | 8I,5 |
| 4. | Beispiel 23 | 0,0 | I00,0 | 3I,8 | 86,4 |
| 5. | Beispiel 24 | 0,0 | I00,0 | 33,4 | 90,8 |
| 6. | Beispiel 25 | I,0 | 96,9 | 35,6 | 96,7 |
| 7. | Beispiel 26 | 0,8 | 97,5 | 34,7 | 94,3 |

Beispiele 27 bis 35

Pflanzen des Winterweizens Sorte Priboi werden ähnlich mit den Beispielen 23-28 mit einer 2%igen wässrigen Emulsion von Dithiophosphorsäure-0,0-diisopropylester (Kalium-Salz), Dithiophosphorsäure-0,0-diisopropylester-S-butylester, Dithiophosphorsäure-0,0,S-triester, N[(Diäthoxythiophosphorylmerkapto)azetyl]-valin-methylamid, Natriumdi-bis-ethylthiophosphinat, Natrium-bis-phenylthiophosphinat, Natrium-bis-butylthiophosphinat, Dibutyl-thiophosphinsäure-S-propylester, Natrium-methan-thiophosphonsäure-0-ethylester behandelt. Die Emulsion enthält 0,I Masse % Kalziumalkylbenzolsulfonat mit I2 bis I4 C-Atomen und 0,0I Masse % Dodezylsulfat. Der Verbrauch an Präparat beträgt I6 kg/ha je 800 Liter Wasser.

Die Prüfergebnisse sind in der Tabelle 3 angeführt. Die ähnlichen Ergebnisse sind bei der Behandlung des Weizens Sorte Priboi in der VI. Periode der Organogenese erhalten.

Tabelle 3

| lfd Nr. | Beispiel Nr. | Anzahl der Kőrner im Isolator | Prozentsatz der Sterilität | Anzahl der Kőrner bei freier Bestäubung | Prozentsatz des Ansetzens bei freier Bestäubung |
|---|---|---|---|---|---|
| I | 2 | 3 | 4 | 5 | 6 |
| I. | Beispiel 27 | I,0 | 96,9 | 35,6 | 96,7 |
| 2. | Beispiel 28 | 3,8 | 88,8 | 34,7 | 94,3 |
| 3. | Beispiel 29 | 0,3 | 99,I | 34,I | 92,7 |
| 4. | Beispiel 30 | 6,9 | 78,5 | 33,2 | 90,2 |
| 5. | Beispiel 3I | 4,2 | 86,9 | 36,0 | 97,8 |
| 6. | Beispiel 32 | 0,7 | 97,9 | 35,8 | 97,3 |
| 7. | Beispiel 33 | 0,0 | I00,0 | 34,0 | 92,4 |
| 8. | Beispiel 34 | 0,I | 99,7 | 3I,6 | 85,9 |
| 9. | Beispiel 35 | 0,5 | 98,4 | 33,8 | 9I,8 |

Beispiele 36 bis 40

Pflanzen des Winterweizens Sorte Pollesskaya 70 werden in der V. Periode der Organogenese nach Kupermann mit einer 2%igen wässrigen Emulsion von Triphenylphosphanoxid, Triphenylphosphansulfid, Phosphorsäure-O,O-di-p-tolylester, Butanphosphonsäure, Diethylester- der N[(Methyläthoxythiophosphorylmerkapto)-azetyl] asparaginsäure behandelt. Die Emulsion enthält 0,I Masse % Kalziumalkylbenzolsulfonat mit I2 bis I4 C-Atomen und 0,0I Masse % Tetrahydrofuran. Der Verbrauch an Präparat beträgt I2 kg/ha beim 600 Liter Wasserdurchsatz. Als Kontrolle dienen Pflanzen, behandelt mit einem Verdünner ohne Sterilisationsmittel.

Die Prüfergebnisse sind in der Tabelle 4 angeführt. Die ähnlichen Ergebnisse sind bei der Behandlung des Winterweizens Sorte Polesskaya 70 in der VI. Periode der Organogenese erhalten.

Tabelle 4

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 34,3 | 0,0 | 37,8 | I00,0 |
| 2. | Beispiel 36 | 0,I | 99,7 | 33,0 | 87,3 |
| 3. | Beispiel 37 | 0,2 | 99,4 | 33,5 | 88,6 |
| 4. | Beispiel 38 | 6,6 | 80,8 | 34,7 | 9I,8 |
| 5. | Beispiel 39 | 0,0 | I00,0 | 33,I | 87,6 |
| 6. | Beispiel 40 | I,I | 96,8 | 36,I | 95,5 |

Beispiele 4I bis 44

Pflanzen des Sommerweizens Moskovskaya 35 werden in der VI. Periode der Organogenese nach Kupermann mit einer 0,5%igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester behandelt. Die Emulsion enthält 0,0I Masse % Dimethylsulfoxid und 0,I Masse % Kalzium-alkylbenzolsulfonat mit I2 bis I4 C-Atomen.

Der Verbrauch an Präparat beträgt 3 kg/ha. Als Kontrolle dienen Pflanzen, behandelt mit einem Verdünner ohne Sterilisationsmittel.

Die Prüfergebnisse sind in der Tabelle 5 angeführt. Die ähnlichen Ergebnisse sind bei der Behandlung des Sommerweizens Moskovskaya 35 in der V. Periode der Organogenese erhalten.

Tabelle 5

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 27,5 | 0,0 | 33,2 | I00,0 |
| 2. | Beispiel 4I | 0,0 | I00,0 | 30,6 | 92,2 |
| 3. | Beispiel 42 | 0,0 | I00,0 | 28,9 | 87,0 |
| 4. | Beispiel 43 | 0,0 | I00,0 | 30,I | 90,7 |
| 5. | Beispiel 44 | 0,0 | I00,0 | 30,8 | 92,8 |

Beispiele 45 bis 63

Pflanzen des Sommerweizens Moskovskaya 35 werden in der V. Periode der Organogenese nach Kupermann mit einer I%igen wässrigen Emulsion von Dithiophosphorsäure-O,O-diisopropylester (Kalium-Salz), Dithiophosphorsäure-O,O-diisopropylester-S-butylester, Dithiophosphorsäure-O,O,S-triethylester, Methylamid des N-[(Diäthoxythiophosphorylmerkapto)azetyl]valins, Natriumdiäthylthiophosphinat, Natriumdiphenylthiophosphinat, Natrium-dibutylthiophosphinat, Dibutyl-thiophosphinsäure-S-propylester, Natrium-metan-thiophosphonsäure-O-ethylester, Natrium-metan-thiophosphonsäure-O-propylester, Natrium-metan-thiophosphonsäure-O-isopropylester, Natrium-metan-thiophosphonsäure-O-butylester, Natrium-metan-thiophosphonsäure-O-amylester, Natrium-metan-thiophosphonsäure-O-hoxylester, Triphenylphosphanoxid, Triphenylphosphansulfid, Phosphorsäure-O,O-di-p-tolylester, Butylphosphonsäure, Diethylester der N[(Methyläthoxythiophosphorylmerkapto)azetyl]-asparaginsäure behandelt. Die Emulsion enthält 0,0I Masse % Dimethylformamid und 0,0I Masse % Kalziumalkylbenzolsulfonat mit I2 bis I4 C-Atomen. Der Verbrauch an Präparat beträgt 8 kg/ha. Als Kontrolle dienen Pflanzen, behandelt mit einem Verdünner ohne Sterilisationsmittel.

Die Prüfergebnisse sind in der Tabelle 6 angeführt.

Die ähnlichen Ergebnisse sind bei der Behandlung des Sommerweizens Moskovskaya 35 in der VI. Periode der Organogenese erhalten.

Tabelle 6

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Beispiel 45 | 0,3 | 99,0 | 3I,2 | 94,0 |
| 2. | Beispiel 46 | 0,0 | I00,0 | 27,7 | 83,4 |
| 3. | Beispiel 47 | 0,0 | I00,0 | 28,2 | 84,9 |
| 4. | Beispiel 48 | 0,7 | 97,5 | 29,9 | 90,I |
| 5. | Beispiel 49 | 5,I | 8I,5 | 30,3 | 9I,3 |
| 6. | Beispiel 50 | 0,2 | 99,3 | 27,8 | 83,7 |
| 7. | Beispiel 5I | 3,2 | 88,4 | 3I,2 | 94,0 |
| 8. | Beispiel 52 | 0,I | 99,6 | 32,0 | 96,4 |
| 9. | Beispiel 53 | 0,0 | I00,0 | 30,I | 90,7 |
| I0. | Beispiel 54 | 0,8 | 97,I | 29,4 | 88,6 |
| II. | Beispiel 55 | 4,2 | 84,7 | 3I,7 | 95,5 |
| I2. | Beispiel 56 | 3,0 | 89,I | 32,7 | 98,5 |
| I3. | Beispiel 57 | 0,7 | 97,5 | 27,8 | 83,7 |
| I4. | Beispiel 58 | 0,0 | I00,0 | 28,4 | 85,5 |
| I5. | Beispiel 59 | 2,0 | 93,8 | 26,7 | 80,4 |
| I6. | Beispiel 60 | 4,4 | 84,0 | 32,I | 96,7 |
| I7. | Beispiel 6I | I,0 | 96,4 | 30,9 | 93,I |
| I8. | Beispiel 62 | 6,2 | 77,5 | 30,I | 90,7 |
| I9. | Beispiel 63 | 0,6 | 97,8 | 32,4 | 97,6 |

Beispiele 64 bis 68

Pflanzen des Sommerweizens Sorte Rodina werden in der V, und VI. Periode der Organogenese nach Kupermann mit einer 0,5%igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester und mit einer 1%igen wässrigen Emulsion von Kalium-0,0-diisopropyldithiophosphat behandelt. Die Emulsion enthält 0,01 Masse % Dimethylsulfoxid und 0,1 Masse % Kalziumalkylbenzolsulfonat mit 12 bis 14 C-Atomen. Der Verbrauch an Präparat beträgt 3 kg/ha beziehungsweise 6 kg/ha. Als Kontrolle dienen Pflanzen, behandelt mit einem Verdünner ohne Sterilisationsmittel.

Die Prüfergebnisse sind in der Tabelle 7 angeführt.

Tabelle 7

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| 1 | 2 | 3 | 4 | 5 | 6 |
| 1. | Kontrolle | 30,3 | 0,0 | 36,6 | 100,0 |
| 2. | Beispiel 64 | 0,0 | 100,0 | 30,7 | 83,9 |
| 3. | Beispiel 65 | 0,0 | 100,0 | 31,8 | 86,9 |
| 4, | Beispiel 66 | 0,0 | 100,0 | 33,4 | 91,2 |
| 5. | Beispiel 67 | 0,0 | 100,0 | 32,2 | 88,0 |
| 6. | Beispiel 68 | 0,1 | 99,7 | 30,3 | 82,8 |

Beispiele 69 bis 75

Pflanzen des Sommerweizens Sorte Botanicheskaya 4 werden in der V. Periode der Organogenese nach Kupermann mit einer 0,5%igen wässrigen Emulsion von Thiophosphorsäure-0,0-diethylester-S-butylester, Thiophosphorsäure-0,0-dipropylester-S-butylester, Thiophosphorsäure-diisobutylester-S-butylester, Dithiophosphorsäure-0,0-diisopropylester (Kalium-Salz), Natriumdiphenylthiophosphinat, Natrium-metan-thiophosphonsäure-0-et-

hylester, Natrium-metan-thiophosphonsäure-O-isopropylester behandelt. Die Emulsion enthält 0,0I Masse % Tetrahydrofuran und 0,I Masse % Kalziumalkylbenzolsulfonat mit I2 bis I4 C-Atomen. Der Verbrauch an Präparat beträgt 4 kg/ha. Als Kontrolle dienen Pflanzen, behandelt mit einem Verdünner ohne Sterilisationsmittel.

Die Prüfergebnisse sind in der Tabelle 8 angeführt.

Die ähnlichen Ergebnisse sind bei der Behandlung des Sommerweizens Sorte Botanicheskaya 4 in der VI. Periode der Organogenese erhalten.

Tabelle 8

| lfd Nr. | Beispiel Nr. | Anzahl von Körnern der Ähre im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 28,2 | 0,0 | 3I,2 | I00,0 |
| 2. | Beispiel 69 | 0,0 | I00,0 | 28,6 | 9I,7 |
| 3. | Beispiel 70 | 0,0 | I00,0 | 2I,5 | 68,9 |
| 4. | Beispiel 7I | 0,0 | I00,0 | 29,3 | 93,9 |
| 5. | Beispiel 72 | 0,0 | I00,0 | 27,4 | 87,8 |
| 6. | Beispiel 73 | 0,8 | 97,2 | 30,2 | 96,8 |
| 7. | Beispiel 74 | 0,I | 99,6 | 30,4 | 97,4 |
| 8. | Beispiel 75 | 0,7 | 97,5 | 30,9 | 99,0 |

Beispile 76 bis 97

Pflanzen des tetraploiden Roggens Sorte Belta werden in der V. Periode der Organogenese nach Kupermann mit einer I,0%igen wässrigen Emulsion von Thiophosphorsäure-O,O-diethylester-S-butylester, Thiophosphorsäure-O,O-dipropylester-S-butylester, Thiophosphorsäure-O,O,S-tributylester, Thiophosphorsäure-O,O-diisobutylester-S-butylester, Dithiophosphorsäure-O,O-diisopropylester (Kalium-Salz), Dithiophosphorsäure-O,O-

diisopropylester-S-butylester Dithiophosphorsäure-O,O,S-triethylester, Methylamid des N [(Diäthoxythiophosphorylmerkapto)azetyl] valins, Natriumdiethylthiophosphinat, Natriumdiphenylthiophosphinat, Natriumdibutylthiophosphinat, Natrium-metan-thiophosphonsäure-O-ethylester, Natrium-metan-thiophosphonsäure-O-propylester, Natrium-metan-thiophosphonsäure-O-isopropylester, Natrium-metan-thiophosphonsäure-O-butylester, Natrium-metan-thiophosphonsäure-O-amylester, Natrium-metan-thiophosphonsäure-O-hexylester, Triphenylphosphanoxid, Triphenylphosphansulfid, Phosphorsäure-O,O-di-p-tolylester, Butylphosphonsäure, Diethylester der N [(Methyläthoxythiophosphorylmerkapto)azetyl] asparaginsäure behandelt.

Die Emulsion enthält 0,0I Masse % Äthylenglykol und 0,I Masse % Kalziumalkylbenzolsulfonat mit I2 bis I4 C-Atomen. Der Verbrauch an Präparat beträgt I0 kg/ha. Als Kontrolle dienen Pflanzen, behandelt mit einem Verdünner ohne Sterilisationsmittel.

Die Prüfergebnisse sind in der Tabelle 9 angeführt.

Die ähnlichen Ergebnisse sind bei der Behandlung des tetraploiden Roggens Belta in der VI. Periode der Organogenese erhalten.

Tabelle 9

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 43,3 | 0,0 | 47,I | I00,0 |
| 2. | Beispiel 76 | 0,0 | I00,0 | 40,8 | 86,8 |
| 3. | Beispiel 77 | 0,0 | I00,0 | 4I,7 | 88,5 |
| 4. | Beispiel 78 | 0,0 | I00,0 | 40,9 | 86,8 |
| 5. | Beispiel 79 | 0,0 | I00,0 | 42,6 | 90,4 |
| 6. | Beispiel 80 | 0,0 | I00,0 | 45,8 | 97,2 |
| 7. | Beispiel 8I | 0,0 | I00,0 | 4I,I | 87,2 |

Fortsetzung der Tabelle 9

| I | 2 | 3 | 4 | 5 | 6 |
|---|---|---|---|---|---|
| 8. | Beispiel 82 | 0,0 | I00,0 | 36,7 | 77,9 |
| 9. | Beispiel 83 | 0,2 | 99,5 | 42,0 | 89,I |
| I0. | Beispiel 84 | 0,I | 99,8 | 4I,6 | 88,3 |
| II. | Beispiel 85 | 0,9 | 97,9 | 42,2 | 89,6 |
| I2. | Beispiel 86 | 2,0 | 95,4 | 38,9 | 82,6 |
| I3. | Beispiel 87 | 0,I | 99,8 | 39,I | 83,0 |
| I4. | Beispiel 88 | 3,6 | 9I,7 | 39,7 | 84,3 |
| I5. | Beispiel 89 | 0,I | 99,8 | 40,5 | 86,0 |
| I6. | Beispiel 90 | 2,I | 95,2 | 42,3 | 89,8 |
| I7. | Beispiel 9I | 0,I | 99,8 | 4I,5 | 88,I |
| I8. | Beispiel 92 | 0,2 | 99,5 | 38,2 | 8I,I |
| I9. | Beispiel 93 | 6,7 | 84,6 | 40,3 | 85,6 |
| 20. | Beispiel 94 | 4,7 | 89,2 | 40,7 | 86,4 |
| 2I. | Beispiel 95 | I,I | 97,5 | 42,2 | 89,6 |
| 22. | Beispiel 96 | 0,0 | I00,0 | 43,4 | 92,I |
| 23. | Beispiel 97 | 0,0 | I00,0 | 43,I | 9I,5 |

Beispiele 98 bis II9

Pflanzen des diploiden Roggens Sorte Chulpan werden in der V. Periode der Organogenese nach Kupermann mit einer I,0%igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester, Dithiophosphorsäure-0,0-diisopropylester (Kalium-Salz), Dithiophosphorsäure-0,0-diisopropylester-S-butylester, Dithiophosphorsäure-0,0,S-triethylester, Methylamid des N[(Diäthoxythiophosphorylmerkapto)azetyl]valins, Natriumdiethylthiophosphinat, Natriumdiphenylthiophosphinat, Natriumdibutylthiophosphinat, Dibutylthiophosphinsäure-S-propylester, Natrium-metan-thiophosphonsäure-0-ethylester, Natrium-metan-thiophosphonsäure-0-propylester, Natrium-metan-thiophosphonsäure-0-isopropylester, Natrium-metan-thiophosphonsäure-0-butylester, Natrium-metan-

thiophosphonsäure-O-amylester, Natrium-metan-thiophosphonsäure-O-hexylester, Triphenylphosphanoxid, Triphenylphosphansulfid, Butylphosphonsäure, Diethylester der N [(Methyläthoxythiophosphorylmerkapto)azetyl] asparaginsäure behandelt. Die Emulsion enthält 0,0I Masse % Dodezylsulfat und 0,I Masse % Kalzium-alkylbenzolsulfonat mit I2 bis I4 C-Atomen. Der Verbrauch an Präparat beträgt 8 kg/ha. Als Kontrolle dienen Pflanzen, behandelt mit einem Verdünner ohne Sterilisationsmittel.

Die Prüfergebnisse sind in der Tabelle IO angeführt.

Die ähnlichen Ergebnisse sind bei der Behandlung des diploiden Roggens Sorte Chulpan in der VI. Periode der Organogenese erhalten.

Tabelle IO

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 5I,I | 0,0 | 64,7 | I00,0 |
| 2. | Beispiel 98 | 0,8 | 98,4 | 56,8 | 87,7 |
| 3. | Beispiel 99 | 0,0 | I00,0 | 54,7 | 84,5 |
| 4. | Beispiel I00 | 0,0 | I00,0 | 57,I | 88,2 |
| 5. | Beispiel I0I | 0,0 | I00,0 | 58,8 | 90,9 |
| 6. | Beispiel I02 | 0,6 | 98,9 | 60,3 | 93,2 |
| 7. | Beispiel I03 | 0,6 | 98,8 | 62,2 | 96,I |
| 8, | Beispiel I04 | I,2 | 97,7 | 60,I | 92,9 |
| 9. | Beispiel I05 | 3,2 | 93,8 | 54,I | 83,6 |
| I0. | Beispiel I06 | 0,I | 99,8 | 53,8 | 83,2 |
| II. | Beispiel I07 | 0,0 | I00,0 | 5I,6 | 79,7 |
| I2. | Beispiel I08 | 0,0 | I00,0 | 5I,0 | 78,8 |
| I3. | Beispiel I09 | 0,8 | 98,4 | 52,8 | 8I,6 |
| I4. | Beispiel II0 | 0,0 | I00,0 | 54,2 | 83,7 |
| I5. | Beispiel III | 0,0 | I00,0 | 46,7 | 72,2 |

Fortsetzung der Tabelle IO

| I | 2 | 3 | 4 | 5 | 6 |
|---|---|---|---|---|---|
| I6. | Beispiel II2 | I,0 | 98,0 | 47,2 | 73,0 |
| I7. | Beispiel II3 | 0,I | 99,8 | 55,6 | 85,9 |
| I8. | Beispiel II4 | 0,I | 99,8 | 58,5 | 90,4 |
| I9. | Beispiel II5 | 3,I | 93,9 | 60,2 | 93,0 |
| 20. | Beispiel II6 | 0,8 | 98,4 | 60,2 | 93,0 |
| 2I. | Beispiel II7 | 0,7 | 98,6 | 62,8 | 97,0 |
| 22. | Beispiel II8 | 5,0 | 90,3 | 57,I | 88,2 |
| 23. | Beispiel II9 | 0,0 | I00,0 | 52,3 | 80,8 |

Beispiele I20 bis I34

Pflanzen des diploiden Roggens Sorte Voskhod-2 werden in der VI. Periode der Organogenese nach Kupermann mit einer I,0%igen wässrigen Emulsion von Thiophosphorsäure-O,O-diethylester-S-butylester, Thiophosphorsäure-O,O-dipropylester-S-butylester, Thiophosphorsäure-O,O,S-tributylester, Thiophosphorsäure-O,O-diisobutylester-S-butylester, Dithiophosphorsäure-O,O-diisopropylester (Kalium-Salz), Dithiophosphorsäure-O,O-diisopropylester-S-butylester, Dithiophosphorsäure-O,O,S-triethylester, Natriumdiphenylthiophosphinat, Natriumdibutylthiophosphinat, Dibutylthiophosphinsäure-S-propylester, Natrium-metan-thiophosphonsäure-O-propylester, Natrium-metan-thiophosphonsäure-O-isopropylester, Natrium-metan-thiophosphonsäure-O-butylester, Natrium-metan-thiophosphonsäure-O-amylester, Butylphosphonsäure behandelt. Die Emulsion enthält 0,0I Masse % Tetrahydrofuran und 0,I Masse % Kalziumalkylbenzolsulfonat mit I2 bis I4 C-Atomen. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle II angeführt. Die ähnlichen Ergebnisse sind bei der Behandlung des diploiden Roggens Sorte Voskhod-2 in der V.

Periode der Organogenese erhalten.

Tabelle II

| lfd Nr. | Beispiel Nr. | Anzahl der Kőrner im Isolator | Prozentsatz der Sterilität | Anzahl der Kőrner bei freier Bestäubung | Prozentsatz des Ansetzens bei freier Bestäubung |
|---|---|---|---|---|---|
| I | 2 | 3 | 4 | 5 | 6 |
| I. | Kontrolle | 49,0 | 0,0 | 55,2 | I00,0 |
| 2. | Beispiel I20 | 0,0 | I00,0 | 50,I | 90,8 |
| 3. | Beispiel I2I | 0,0 | I00,0 | 47,8 | 86,6 |
| 4. | Beispiel I22 | 0,0 | I00,0 | 49,2 | 89,I |
| 5. | Beispiel I23 | 0,0 | I00,0 | 5I,2 | 92,7 |
| 6. | Beispiel I24 | 0,0 | I00,0 | 53,4 | 96,7 |
| 7. | Beispiel I25 | 3,I | 93,7 | 52,8 | 95,6 |
| 8. | Beispiel I26 | 2,0 | 96,0 | 50,4 | 9I,3 |
| 9. | Beispiel I27 | 6,8 | 88,4 | 52,6 | 95,3 |
| I0. | Beispiel I28 | 0,I | 99,8 | 50,3 | 9I,I |
| II. | Beispiel I29 | 2,I | 95,7 | 52,I | 94,3 |
| I2. | Beispiel I30 | 0,8 | 98,4 | 47,4 | 85,9 |
| I3. | Beispiel I3I | 3,6 | 92,7 | 45,6 | 82,6 |
| I4. | Beispiel I32 | 0,2 | 99,6 | 50,3 | 9I,I |
| I5. | Beispiel I33 | 0,0 | I00,0 | 49,6 | 89,9 |
| I6. | Beispiel I34 | 0,0 | I00,0 | 5I,0 | 92,4 |

Beispiele I35 bis I39

Pflanzen des diploiden Roggens Sorte Talovskaya I2 werden in der V. und VI. Periode der Organogenese nach Kupermann mit einer I%igen wässrigen Emulsion von Thiophosphorsäure-O,O-diethylester-S-butylester, Thiophosphorsäure-O,O-dipropylester-S-butylester, Thiophosphorsäure-O,O,S-tributylester Thiophosphorsäure-O,O-diisobutylester-S-butylester, Dithiophosphorsäure-O,O-diisopropylester (Kalium-Salz), behandelt. Die Emulsion enthält 0,0I Masse % Dimethylsulfoxid und 0,I Masse % Kalziumalkylbenzolsulfonat mit I2 bis I4 C-Atomen.

Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle I2 angeführt.

Tabelle I2

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 40,2 | 0,0 | 56,2 | I00,0 |
| 2. | Beispiel I35 | 0,0 | I00,0 | 48,6 | 86,5 |
| 3. | Beispiel I36 | 0,0 | I00,0 | 5I,2 | 9I,I |
| 4. | Beispiel I37 | 0,0 | I00,0 | 50,7 | 90,2 |
| 5. | Beispiel I38 | 0,0 | I00,0 | 52,2 | 92,9 |
| 6. | Beispiel I39 | 0,0 | I00,0 | 53,8 | 95,7 |

Beispiele I40 bis I49

Pflanzen von Tritikale Amfidiploid 206 werden in der V. Periode der Organogenese nach Kupermann mit einer I%igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester, Dithiophosphorsäure-0,0-diisopropylester (Kalium-Salz), Dithiophosphorsäure-0,0-diisopropylester-S-butylester, Dithiophosphorsäure-0,0,S-triethylester, Natriumdiphenylthiophosphinat, Natriumdibutylthiophosphinat, Natrium-metan-thiophosphonsäure-0-ethylester behandelt. Die Emulsion enthält 0,0I Masse % Dimethylformamid und 0,I Masse % Kalziumalkylbenzolsulfonat mit I2 bis I4 C-Atomen. Der Verbrauch an Präparat beträgt 6 kg/ha. Als Kontrolle dienen

Pflanzen, behandelt mit einem Verdünner ohne Sterilisationsmittel.

Die Prüfergebnisse sind in der Tabelle I3 angeführt. Die ähnlichen Ergebnisse sind bei der Behandlung von Tritikale Amfidiploid 206 in der VI. Periode der Organogenese erhalten.

Tabelle I3

| lfd Nr. | Beispiel Nr. | Anzahl der körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 28,6 | 0,0 | 36,4 | I00,0 |
| 2. | Beispiel I40 | 0,0 | I00,0 | 29,8 | 8I,9 |
| 3. | Beispiel I4I | 0,0 | I00,0 | 32,6 | 89,6 |
| 4. | Beispiel I42 | 0,0 | I00,0 | 30,3 | 83,2 |
| 5. | Beispiel I43 | 0,0 | I00,0 | 27,4 | 75,3 |
| 6. | Beispiel I44 | 0,I | 99,7 | 32,8 | 90,I |
| 7. | Beispiel I45 | 2,8 | 90,2 | 30,4 | 83,5 |
| 8. | Beispiel I46 | 0,0 | I00,0 | 35,I | 96,4 |
| 9. | Beispiel I47 | 2,6 | 90,I | 34,7 | 95,3 |
| I0. | Beispiel I48 | 0,8 | 97,7 | 3I,5 | 86,5 |
| II. | Beispiel I49 | 0,0 | I00,0 | 28,6 | 78,6 |

Beispiele I50 bis I58

Pflanzen Tritikale PRAG-I09 werden in der V. Periode der Organogenese nach Kupermann mit einer I,5%-igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester, Dithiophosphorsäure-0,0-diisopropylester (Kalium-Salz), Dithiophosphorsäure-0,0,S-triethylester, Natriumdiphenylthiophosphinat, Natriumdibutylthiophosphinat, Natrium-metan-thiophosphonsäure-0-ethylester

behandelt.

Die Emulsion enthält 0,0I Masse % Tetrahydrofuran und 0,I Masse % Kalziumalkylbenzolsulfonat mit I2 bis I4 C-Atomen. Der Verbrauch an Präparat beträgt I5 kg/ha. Als Kontrolle dienen Pflanzen, behandelt mit einem Verdünner ohne Sterilisationsmittel. Die Prüfergebnisse sind in der Tabelle I4 angeführt. Die ähnlichen Ergebnisse sind bei der Behandlung von Tritikale PRAG-I09 in der VI. Periode der Organogenese erhalten.

Tabelle I4

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 62,2 | 0,0 | 69,0 | I00,3 |
| 2. | Beispiel I50 | 0,0 | I00,0 | 47,8 | 69,3 |
| 3. | Beispiel I5I | 0,0 | I00,0 | 58,6 | 84,9 |
| 4. | Beispiel I52 | 0,0 | I00,0 | 5I,5 | 74,6 |
| 5. | Beispiel I53 | 0,0 | I00,0 | 62,8 | 9I,0 |
| 6. | Beispiel I54 | 0,6 | 99,0 | 64,2 | 93,0 |
| 7. | Beispiel I55 | 0,I | 99,8 | 62,7 | 90,9 |
| 8. | Beispiel I56 | 0,8 | 98,7 | 60,3 | 87,I |
| 9. | Beispiel I57 | I,I | 98,2 | 63,7 | 92,3 |
| I0. | Beispiel I58 | 0,0 | I00,0 | 65,I | 94,3 |

Beispiele I59-I75

Pflanzen der Hirse Sorte Mironovskaya-94 werden in der V. Periode der Organogenese nach Kupermann mit einer I%igen wässrigen Emulsion von Thiophosphorsäure-0,0-diethylester-S-butylester, Thiophosphorsäure-0,0-dipropylester-S-butylester, Thiophosphorsäure-0,0,S-tributylester, Thiophosphorsäure-0,0-diisobutylester-S-butylester, Dithiophosphorsäure-0,0-diisopropyles-

ter (Kalum-Salz), Dithiophosphorsäure-0,0-diisopropylester-S-butylester, Dithiophosphorsäure-0,0,S-trietyl ester, Natriumdiphenylthiophosphinat, Natriumdibutylthiophosphinat, Dibutylthiophosphinsäure-S-propylester, Natrium-metan-thiophosphonsäure-S-ethylester, Natrium-metan-thiophosphonsäure-0-propylester, Natrium-metan-thiophosphonsäure-0-isopropylester, Natrium-metan-thiophosphonsäure-0-butylester, Natrium-metan-thiophosphonsäure-0-hexylester, Butylphosphonsäure, Diethylester der N-[(Methyläthoxythiophosphorylmerkapto)azetyl]asparaginsäure behandelt. Die Emulsion enthält 0,0I Masse % Dimethylsulfoxid und 0,I Masse % Kalziumalkylbenzolsulfonat mit I2 bis I4 C-Atomen. Der Verbrauch an Präparat beträgt 8 kg/ha. Als Kontrolle dienen Pflanzen, behandelt mit einem Verdünner ohne Sterilisationsmittel. Die Prüfergebnisse sind in der Tabelle I5 angeführt. Die ähnlichen Ergebnisse sind bei der Behandlung der Hirse Sorte Mironovskaya-94 in der VI. Periode der Organogenese erhalten.

Tabelle I5

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | I84,0 | 0,0 | 227,3 | I00,0 |
| 2. | Beispiel I59 | 0,0 | I00,0 | I56,7 | 68,9 |
| 3. | Beispiel I60 | 0,0 | I00,0 | I68,4 | 74,I |
| 4. | Beispiel I6I | 0,0 | I00,0 | I87,2 | 82,3 |
| 5. | Beispiel I62 | 0,0 | I00,0 | I86,7 | 82,I |
| 6. | Beispiel I63 | 0,0 | I00,0 | 209,6 | 92,2 |
| 7. | Beispiel I64 | 0,0 | I00,0 | 200,I | 88,0 |
| 8. | Beispiel I65 | 0,0 | I00,0 | I82,3 | 80,2 |
| 9. | Beispiel I66 | 0,0 | I00,0 | I59,4 | 70,I |

Fortsetzung der Tabelle I5

| I | 2 | 3 | 4 | 5 | 6 |
|---|---|---|---|---|---|
| I0. | Beispiel I67 | 0,0 | I00,0 | I94,5 | 85,6 |
| II. | Beispiel I68 | 0,0 | I00,0 | I90,6 | 83,9 |
| I2. | Beispiel I69 | 0,0 | I00,0 | 207,8 | 9I,4 |
| I3. | Beispiel I70 | 0,0 | I00,0 | 200,5 | 88,2 |
| I4. | Beispiel I7I | 0,0 | I00,0 | I92,I | 84,5 |
| I5. | Beispiel I72 | 0,0 | I00,0 | I87,3 | 82,4 |
| I6. | Beispiel I73 | 0,0 | I00,0 | I67,2 | 73,6 |
| I7. | Beispiel I74 | 0,0 | I00,0 | I56,7 | 68,9 |
| I8. | Beispiel I75 | 0,0 | I00,0 | I89,4 | 83,3 |

Beispiele I76-I86

Pflanzen der Hirse K-9693 Kormovoe I werden in der V. Periode der Organogenese nach Kupermann mit einer I%igen wässrigen Emulsion von Thiophosphorsäure-O,O-diethylester-S-butylester, Thiophosphorsäure-O,O-dipropylester-S-butylester, Thiophosphorsäure-O,O,S-tributylester, Thiophosphorsäure-O,O-diisobutylester-S-butylester, Dithiophosphorsäure-O,O-diisopropylester (Kalum-Salz), Dithiophosphorsäure-O,O-diisopropylester-S-butylester, Dithiophosphorsäure-O,O,S-triethylester, Natriumdiphenylthiophosphinat, Natriumdibutylthiophosphinat, Natrium-metan-thiophosphonsäure-O-ethylester, Natrium-metan-thiophosphonsäure-O-propylester behandelt. Die Emulsion enthält 0,0I Masse % Dodezylsulfat und 0,I Masse % Kalziumalkylbenzolsulfonat mit I2 bis I4 C-Atomen. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle I6 angeführt. Die ähnlichen Ergebnisse sind bei der Behandlung der Hirse K-9693 Kormovoe I in der VI. Periode der Organogenese erhalten.

Tabelle I6

| lfd Nr. | Beispiel Nr. | Anzahl der Körner im Isolator | Prozentsatz der Sterilität | Anzahl der Körner bei freier Bestäubung. | Prozentsatz des Ansetzens bei freier Bestäubung |
|---|---|---|---|---|---|
| I | 2 | 3 | 4 | 5 | 6 |
| I. | Kontrolle | I25,0 | 0,0 | I46,7 | I00,0 |
| 2. | Beispiel I76 | 0,0 | I00,0 | 98,4 | 67,0 |
| 3. | Beispiel I77 | 0,0 | I00,0 | I0I,6 | 69,3 |
| 4. | Beispiel I78 | 0,0 | I00,0 | I09,7 | 74,8 |
| 5. | Beispiel I79 | 0,0 | I00,0 | I27,8 | 87,I |
| 6. | Beispiel I80 | 0,0 | I00,0 | I30,5 | 89,0 |
| 7. | Beispiel I8I | 0,0 | I00,0 | I3I,I | 89,3 |
| 8. | Beispiel I82 | 0,0 | I00,0 | I35,8 | 92,6 |
| 9. | Beispiel I83 | 0,0 | I00,0 | I2I,7 | 82,9 |
| I0. | Beispiel I84 | 0,0 | I00,0 | II0,4 | 75,3 |
| II. | Beispiel I85 | 0,0 | I00,0 | I29,5 | 88,2 |
| I2. | Beispiel I86 | 0,0 | I00,0 | I36,I | 92,8 |

Beispiele I87-I88

Pflanzen der Sonnenblume Sorte BNIIMK 893I werden in der V. Periode der Organogenese nach Kupermann mit einer I%igen wässrigen Emulsion von Dithiophosphorsäure-0,0-diisopropylester (Kalium-Salz) und mit einer 0,I%igen wässrigen Emulsion von Dithiophosphorsäure-0,0-diisopropylester- S-butylester behandelt. Die Emulsion enthält 0,0I Masse % Dimethylsulfoxid und 0,I Masse % Kalziumalkylbenzolsulfonat mit I2 bis I4 C-Atomen.

Der Verbrauch an Präparat beträgt 6 kg/ha bzw. 0,6 kg/ha. Als Kontrolle dienen Pflanzen, behandelt mit einem Verdünner ohne Sterilisationsmittel. Die Prüfergebnisse sind in der Tabelle I7 angeführt. Die ähnlichen Ergebnisse sind bei der Behandlung der Sonnenblume Sorte VNIIMK 893I in der VI. Periode der Or-

ganogenese erhalten.

Tabelle I7

| lfd Nr. | Beispiel Nr. | Prozentsatz der Sterilität | Ansetzen der Achänen bei freier Bestäubung | Masse von I000 Achänen | Ölgehalt der Achänen in % | Wachstumsenergie in % |
|---|---|---|---|---|---|---|
| I | 2 | 3 | 4 | 5 | 6 | 7 |
| I. | Kontrolle | 0,5 | 85,7 | 83,0 | 54,7 | I00,0 |
| 2. | Beispiel I87 | I00,0 | 89,0 | 82,0 | 54,7 | I00,0 |
| 3. | Beispiel I88 | I00,0 | 85,4 | 90,0 | 54,5 | I00,0 |

Beispiele I89 bis I90

Pflanzen der Sonnenblume Sorte Peredovik werden in der VI. Periode der Organogenese nach Kupermann mit einer 0,2%igen wässrigen Emulsion von Thiophosphorsäure-0,0-diisobutylester-S-butylester und mit einer 0,I%igen wässrigen Emulsion von Thiophosphorsäure-0,0-diethylester-S-butylester behandelt. Die Emulsion enthält 0,0I Masse % N,N-Dimethylformamid und 0,I Masse % Kalziumalkylbenzolsulfonat mit I2 bis I4 C-Atomen. Der Verbrauch an Präparaten beträgt I,2 kg/ha bzw. 0,6 kg/ha. Als Kontrolle dienen Pflanzen, behandelt mit einem Verdünner ohne Sterilisationsmittel.

Die Prüfergebnisse sind in der Tabelle I8 angeführt. Die ähnlichen Ergebnisse sind bei der Behandlung der Sonnenblume Sorte Peredovik in der V. Periode der Organogenese erhalten.

Tabelle I8

| lfd Nr. | Beispiel Nr. | Prozentsatz der Sterilität | Ansetzen der Achänen bei freier Bestäubung | Masse von I000 Achänen in g | Ölgehalt der Achänen in % | Wachstumsenergie in % |
|---|---|---|---|---|---|---|
| I | 2 | 3 | 4 | 5 | 6 | 7 |
| I. | Kontrolle | 0,2 | 85,0 | 84,0 | 54,7 | I00,0 |
| 2. | Beispiel I89 | I00,0 | 82,5 | 83,0 | 57,0 | I00,0 |
| 3. | Beispiel I90 | I00,0 | 85,0 | 82,5 | 55,0 | I00,0 |

Beispiele I9I bis I93

Pflanzen der Sonnenblume Linie BK-II9 werden in der V. Periode der Organogenese nach Kupermann mit einer 0,2%igen wässrigen Emulsion von Thiophosphorsäure-0,0-diisobutylester-S-butylester, I%igen wässrigen Emulsion von Dithiophosphorsäure-0,0-diisopropylester (Kalium-Salz), mit einer 0,I%igen wässrigen Emulsion von Thiophosphorsäure-0,0-diethylester-S-butylester behandelt.

Die Emulsion enthält 0,0I Masse % Tetrahydrofuran und 0,I Masse % Kalziumalkylbenzolsulfonat mit I2 bis I4 C-Atomen. Der Verbrauch an Präparat beträgt I,2 kg/ha, 6 kg/ha bzw. 0,6 kg/ha. Als Kontrolle dienen Pflanzen, behandelt mit einem Verdünner ohne Sterilisationsmittel.

Die Prüfergebnisse sind in der Tabelle I9 angeführt. Die ähnlichen Ergebnisse sind bei der Behandlung der Sonnenblume Linie BK-II9 in der VI. Periode der Organogenese erhalten.

Tabelle I9

| lfd Nr. | Beispiel Nr. | Prozentsatz der Sterilität | Ansetzen der Achänen bei freier Bestäubung | Masse von I000 Achänen in g | Ölgehalt der Achänen in % | Wachstumsenergie in % |
|---|---|---|---|---|---|---|
| I | 2 | 3 | 4 | 5 | 6 | 7 |
| I. | Kontrolle | 2,0 | 85,0 | 60,0 | 5I,0 | I00,0 |
| 2. | Beispiel I9I | I00,0 | 82,0 | 58,0 | 53,0 | I00,0 |
| 3. | Beispiel I92 | I00,0 | 82,6 | 65,4 | 53,4 | 98,0 |
| 4. | Beispiel I93 | I00,0 | 80,0 | 62,8 | 53,8 | I00,0 |

Beispiele I94 bis I96

Pflanzen des Winterweizens Sorte Mironovskaya 808 werden in der V. Periode der Organogenese nach Kupermann mit einer 2%igen wässrigen Emulsion eines Gemisches aus Thiophosphorsäure-O,O-diethylester-S-butylester und Natrium-metan-thiophosphonsäure-O-ethylester, genommen in einem Gewichtsverhältnis von I:5, eines Gemisches aus Thiophosphorsäure-O,O-dipropylester-S-butylester und Dithiophosphorsäure-O,O-diisopropylester (Kalium-Salz), genommen in einem Gewichtsverhältnis von I:5 und eines Gemisches aus Thiophosphorsäure-O,O,S-tributylester und Dibutylthiophosphinsäure-S-propylester, genommen in einem Verhältnis von I:5, behandelt.

Die Emulsion enthält 0,0I Masse % Dimethylsulfoxid und 0,I Masse % Kalziumalkylbenzolsulfonat mit I2 bis I4 C-Atomen. Der Verbrauch an Präparat beträgt I2 kg/ha. Als Kontrolle dienen Pflanzen, behandelt mit einem Verdünner ohne Sterilisationsmittel. Die Prüfergebnisse sind in der Tabelle 20 angeführt. Die ähnlichen Ergebnisse sind bei der Behandlung des Winterweizens Sorte Mironovskaya 808 in der VI. Periode der Organogenese erhalten.

Tabelle 20

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 38,3 | 0,0 | 4I,0 | I00,0 |
| 2. | Beispiel I94 | 0,0 | I00,0 | 39,8 | 97,0 |
| 3. | Beispiel I95 | 0,0 | I00,0 | 37,5 | 9I,5 |
| 4. | Beispiel I96 | 0,0 | I00,0 | 39,6 | 96,6 |

Beispiele I97 - I98

Pflanzen des Sommerweizens Sorte Moskovskaya 35 werden in der V. Periode der Organogenese nach Kupermann mit einer I%igen wässrigen Emulsion eines Gemisches aus Dithiophosphorsäure-0,0-diisopropylester (Kalium-Salz), und Dithiophosphorsäure-0,0,S-triethylester genommen in einem Gewichtsverhältnis von I:I, eines Gemisches aus Dithiophosphorsäure-0,0,S-triethylester und Natrium-metan-thiophosphonsäure-0-hexylester, genommen in einem Gewichtsverhältnis von I:I, behandelt.

Die Emulsion enthält 0,0I Masse % Dimethylformamid und 0,I Masse % Kalziumalkylbenzolsulfonat mit I2 bis I4 C-Atomen. Der Verbrauch an Präparat beträgt I0 kg/ha. Die Prüfergebnisse sind in der Tabelle 2I angeführt. Die ähnliche Ergebnisse sind bei der Behandlung des Sommerweizens Moskovskaya 35 in der VI. Periode der Organogenese erhalten.

Tabelle 2I

| lfd Nr. | Beispiel Nr. | Anzahl der Körner im Isolator | Prozentsatz der Sterilität | Anzahl der Körner bei freier Bestäubung | Prozentsatz des Ansetzens bei freier Bestäubung |
|---|---|---|---|---|---|
| I | 2 | 3 | 4 | 5 | 6 |
| I. | Kontrolle | 28,8 | 0,0 | 32,I | I00,0 |
| 2. | Beispiel I97 | 0,0 | I00,0 | 30,8 | 95,9 |
| 3. | Beispiel I98 | 0,0 | I00,0 | 3I,8 | 99,I |

Industrielle Anwendbarkeit

Das erfindungsgemässe Verfahren findet seine Anwendung in der Selektion und im Samenbau zur Herstellung von hochproduktiven Sorten und Hybriden der landwirtschaftlichen Kulturen.

PATENTANSPRÜCHE:

I. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, d a d u r c h gekennzeichnet, dass als Sterilisationsmittel Phosphorsäurederivate der allgemeinen Formel

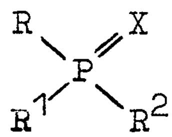

worin X für O,S steht,

R und R' für Alkyl-, Aryl-, Alkoxyl-. Aroxyl-, Hydroxylgruppen steht;

$R^2$ Alkyl-, Aryl-, Alkoxyl-, Aroxyl-, Merkaptoalkyl-, Hydroxylgruppen, durch Metall wasserstoffsubstituierte Hydroxylgruppen, Sulfhydrylgruppen, durch Metall wasserstoffsubstituierte Sulfhydrylgruppen, Karbamoylmethylmerkaptogruppen bedeutet,

oder Gemische dieser Verbindungen verwendet werden.

2. Verfahren nach Anspruch I, d a d u r c h gekennzeichnet, dass man die genannten Phosphorsäurederivate in Verbindung mit einem Verdünner in Form einer 0,I bis 2,0%igen wässrigen Emulsion verwendet.

3. Verfahren nach Anspruch I, 2 d a d u r c h gekennzeichnet, dass man als Pflanzen, behandelt mit einem Sterilisationsmittel, Graspflanzen und Sonnenblume verwendet.

4. Verfahren nach einem beliebigen der Ansprüche I bis 3, d a d u r c h gekennzeichnet, dass zwecks Erzielung eines hohen Sterilisationsgrades von Staubbeuteln unter ungünstigen Klimabedingungen die Behandlung der Pflanzen mit dem Sterilisationsmittel in der V. und/oder VI. Periode der Organogenese wiederholt durchgeführt wird.

88705967.9 0070

# INTERNATIONAL SEARCH REPORT

International Application No PCT/SU 88/00056

**I. CLASSIFICATION OF SUBJECT MATTER** (if several classification symbols apply, indicate all) [6]

According to International Patent Classification (IPC) or to both National Classification and IPC

$IPC^4$ A01N 57/02;A01H 1/02

**II. FIELDS SEARCHED**

Minimum Documentation Searched [7]

| Classification System | Classification Symbols |
|---|---|
| $IPC^4$ | A01N 57/02-57/06,57/10-57/14,57/18-57/22, A01H 1/02-1/04 |

Documentation Searched other than Minimum Documentation to the Extent that such Documents are Included in the Fields Searched [8]

DD - A01N 43/56, 43/58, 57/02;A01H 1/04

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU, A1, 640711 (Vsesojuzny ordena Lenina i ordena Druzhby narodov nauchno-issledovatelsky institut rastenievodstva im Vsesojuznoi ordena Lenina akademii selskokhozyaistvennykh nauk im V.I. Lenina et al.) 08 January 1979 (08.01.79) | 1,3 |
| A | SU, A1, 640710 (Vsesojuznoi ordena Lenina akademii selskokhozyaistvennykh nauk im V.I. Lenina et al.) 08 January 1979 (08.0179) | 1,3 |
| A | SU, A1, 965337 (Shell International Research Maatschappij B.V.) 07 October 1982 (07.10.82) | 1-4 |
| A | SU, A3, 931087 (Rom and Haas Company) 23 May 1982 (23.05.82) | 1-4 |
| | ./. | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 October 1988 (10.10.88) | 16 December 1988 (16.12.88) |
| **International Searching Authority** | **Signature of Authorized Officer** |
| ISA/SU | |

International Application No. PCT/SU 88/00056

III. DOCUMENTS CONSIDERED TO BE RELEVANT (CONTINUED FROM THE SECOND SHEET)

| Category * | Citation of Document, with indication, where appropriate, of the relevant passages | Relevant to Claim No |
|---|---|---|
| A | L. Dzh. Nikell "Regulyatory rosta rasteny. Primenenie v selskom khozyaistve" 1984 Kolos, (Moscow), pages 30-31 (cited in the description) | 1-4 |
| A | EP, A1, 0037133 (SHELL INTERNATIONALE RESEARCH MAATSCHAPPIJ B.V.) 07 October 1981 (07.10.81) see pages 11,21-23 | 1 |
| A | DD, A, 236870 (Eli Lilly and Company) 25 June 1986 (25.06.86) see pages 1,2, 5,6,32-41,56,57,75,76 | 1-3 |